# FASCICULE DE BREVET EUROPEEN

(11) **EP 4 172 220 B1**
(45) Date de publication et mention de la délivrance du brevet: **14.10.2026**
(21) Numéro de dépôt: 21743221.0
(22) Date de dépôt: 24.06.2021
(51) Int. Cl.: C08F 220/06, C09D 133/02

(54) **COPOLYMERE RETICULE, PROCEDE DE PREPARATION ET PATE D'IMPRESSION COMPRENANT LEDIT COPOLYMERE**
VERNETZTES COPOLYMER, HERSTELLUNGSVERFAHREN UND DRUCKPASTE MIT DIESEM COPOLYMER
CROSSLINKED COPOLYMER, PREPARATION METHOD AND PRINTING PASTE COMPRISING SAID COPOLYMER

(30) Priorité: 25.06.2020 FR 2006646
(43) Date de publication de la demande: 03.05.2023
(73) Titulaire: SNF Group, 42160 Andrézieux-Bouthéon (FR)
(72) Inventeur: BLONDEL, Frédéric, 42160 ANDREZIEUX BOUTHEON (FR); CHOLLAT-NAMY, Hadrien, 42160 ANDREZIEUX BOUTHEON (FR); THIBAL, Rémi, 42160 ANDREZIEUX BOUTHEON (FR)
(74) Mandataire: Ipsilon
(86) Numéro de dépôt international: PCT/FR2021/051157
(87) Numéro de publication internationale: WO 2021/260331

(56) Documents cités:
- EP-A1- 0 161 038
- CN-A- 101 775 099
- US-A- 3 915 921
- US-A- 4 267 103
- US-A- 4 509 949
- US-A1- 2011 158 929
- US-B1- 6 433 061
- US-B1- 6 528 575
- XIAOYUAN MA ET AL: "Properties of powdered associative alkali-swellable acrylics thickeners synthesized by precipitation polymerization", JOURNAL OF APPLIED POLYMER SCIENCE, vol. 131, no. 15, 5 August 2014 (2014-08-05), US, pages n/a - n/a, XP055764979, ISSN: 0021-8995, DOI: 10.1002/app.40512

## Description

### Domaine de l'invention

L'invention concerne notamment le domaine des épaississants acryliques. Plus précisément l'invention concerne un copolymère réticulé à base de monomères comprenant une fonction acide carboxylique, notamment une fonction acide acrylique. Un autre aspect de l'invention concerne un procédé de préparation dudit copolymère réticulé. Un autre aspect de l'invention concerne une pâte d'impression comprenant ce copolymère réticulé, ainsi qu'un procédé de préparation d'une telle pâte d'impression.

### Etat antérieur de la technique

Le brevet US4722958 décrit un procédé de préparation de copolymères d'acrylamide/acide acrylique/méthacrylate d'alkyle dans lesquels les fonctions acides sont totalement neutralisées, c'est-à-dire sous forme salifiée préalablement à l'étape de polymérisation. La présence d'acrylamide permet de faire précipiter le copolymère une fois la polymérisation terminée. Toutefois, ces polymères présentent l'inconvénient de contenir de l'acrylamide qui diminue la charge anionique du polymère final et ses performances épaississantes. Par ailleurs, la préparation de ces polymères nécessite la manipulation d'un monomère dangereux pour la santé et apporte des fonctions azote dont la présence dans les effluents des usines textiles tend à être de plus en plus réglementée et limitée. De plus, dans le cas d'une polymérisation par précipitation, l'acrylamide doit être employé sous sa forme pure en poudre, ce qui rend la manipulation compliquée et risquée.

Le document US 6,433,061 et Xiaoyuan et al. (Properties of powdered associative alkali-swellable acrylics thickeners synthesized by precipitation polymerization", Journal of Applied Polymer Science, vol. 131, no. 15, 2014) décrivent l'utilisation de monomères hydrophobes, mais il ne décrivent pas la préparation de polymères par polymérisation par précipitation dans un alcool en C1-C4.

Le document US 4,509,949 décrit des polymères d'acide acrylique réticulés obtenus par polymérisation par précipitation. Des solvants de type hydrocarbures sont utilisés dans les exemples, notamment le benzène. Ce document ne décrit pas la neutralisation du monomère acide.

Le Brevet US6696508 décrit des formulations basées sur des polymères d'acide acrylique obtenus par polymérisation par précipitation (acronyme PPP) et formulés en dispersion huileuse dans un solvant naturel. Lors de l'utilisation, ces polymères ou copolymères d'acide acrylique sont sous forme non-neutralisés et doivent être neutralisés par l'ajout d'une base dans la formulation liquide. Dans ce cas le polymère d'acide acrylique est neutralisé par bullage à l'ammoniac dans la dispersion. Cette opération constitue donc une étape supplémentaire complexe, qui nécessite du temps et des moyens industriels adaptés à ce type de procédé spécifique. Dans le cas où une autre base que l'ammoniac est utilisée pour ajuster le pH de la formulation, comme par exemple du carbonate ou de l'hydrogénocarbonate, des problèmes de stabilité surviennent du fait d'une sédimentation de la base utilisée ou d'une libération au bout de quelques jours de gaz carbonique résultant de la neutralisation des fonctions polyacide acrylique.

Le document EP0161038 décrit un procédé de préparation d'un polymère hydrophobe ou hydrogonflant (« *water swellable* » en anglais) qui met en œuvre une étape de neutralisation des fonctions acide carboxylique d'un monomère anionique. Ce procédé est réalisé par polymérisation en émulsion inverse, dans un solvant hydrocarboné, à partir de monomères acides insaturés comprenant des fonctions acides libres et des fonctions acides salifiées, et d'un agent de réticulation.

Par ailleurs, lors de l'impression d'une matière textile avec une pâte d'impression à base d'acide acrylique, on constate parfois l'apparition d'un voile blanc à la surface de la matière textile imprimée. Ce problème bien connu de l'homme du métier est appelé glaçage ou « frosting » en anglais, et est dû au maintien insuffisant de la pâte d'impression à la surface de la matière textile lors de l'impression. Le sommet des fils du textile, ou des poils dans le cas d'une moquette par exemple, n'est alors plus couvert par la pâte colorée et reste blanc, ce qui produit cet effet de surface indésirable.

La présente invention permet de surmonter les inconvénients de l'art antérieur. L'invention vise notamment à préparer un copolymère réticulé sans utiliser d'acrylamide, tout en conservant voire en améliorant les propriétés épaississantes de ce copolymère par rapport à ceux de l'état de l'art.

### Exposé de l'invention

Selon un premier aspect, l'invention concerne un copolymère réticulé obtenu par polymérisation par précipitation d'au moins :
- 60 % à 99,8 % molaire d'au moins un monomère anionique comprenant au moins une fonction acide carboxylique,
- 0,1 % à 20% molaire d'au moins un monomère hydrophobe de formule (I), R₂R₃C=CR₁X, 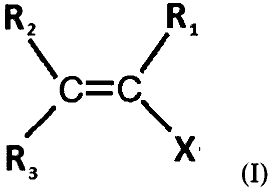 dans laquelle :
   * R₁, R₂ et R₃ sont, indépendamment l'un de l'autre, un atome d'hydrogène ou un groupe méthyle,
   * X est un groupe C(=O)-O-Y,
   dans lequel Y est un groupe hydrocarboné, saturé ou insaturé, linéaire ou ramifié, comprenant 15 à 25 atomes de carbone,
- 1 x 10⁻⁹ % à 2 % molaire d'au moins un agent réticulant.

Le copolymère réticulé est principalement caractérisé en ce que 30 % à 90 % des fonctions acide carboxylique du monomère anionique sont neutralisées, c'est-à-dire sous forme salifiée, préalablement à la polymérisation par précipitation, et en ce que le solvant utilisé pour la polymérisation par précipitation est composé d'au moins un alcool comprenant 1 à 4 atomes de carbone, et en ce que le copolymère réticulé est obtenu en l'absence de monomères non ioniques hydrosolubles.

Tous les pourcentages molaires sont exprimés par rapport au nombre total de moles de monomères incluant l'agent réticulant.

Selon un mode de réalisation, la somme des pourcentages molaires du monomère anionique comprenant au moins une fonction acide carboxylique, du monomère hydrophobe de formule (I), et de l'agent réticulant, est égale à 100 % molaire.

La combinaison des caractéristiques du copolymère de l'invention, à savoir (1) la présence de 60 % à 99,8 % molaire du monomère anionique comprenant au moins une fonction acide carboxylique, (2) la présence de 0,1 % à 20% molaire du monomère hydrophobe de formule (I), (3) la polymérisation par précipitation, (4) la neutralisation de 30 % à 90 % des fonctions acide carboxylique du monomère anionique préalablement à la polymérisation, et (5) l'utilisation d'un alcool comprenant 1 à 4 atomes de carbone, conduit à un effet de synergie qui permet d'obtenir un copolymère réticulé présentant des propriétés épaississantes au moins équivalentes à celles de copolymères de l'état de l'art, tout en se passant d'acrylamide.

De plus, le copolymère de l'invention présente l'avantage d'éviter le phénomène de glaçage, lorsqu'il est utilisé dans une pâte d'impression pour réaliser l'impression d'une matière textile.

Selon un mode de réalisation, le copolymère réticulé de l'invention est obtenu par polymérisation par précipitation, en présence d'un agent réticulant, des seuls monomères suivants : 60 % à 99,8 % molaire dudit au moins un monomère anionique comprenant au moins une fonction acide carboxylique, et de 0,1 % à 20% molaire dudit au moins un monomère hydrophobe de formule (I). En d'autres termes, selon ce mode de réalisation, le copolymère réticulé obtenu ne comprend que le monomère anionique et le monomère hydrophobe de formule (I) en tant que monomères constitutifs. L'homme du métier saura ajuster les pourcentages molaires de ces deux monomères afin d'atteindre 100 % par rapport au nombre total de moles de monomères et de réticulant.

De manière avantageuse, le copolymère réticulé selon l'invention ne comprend pas de monomère anionique supplémentaire qui serait différent du monomère anionique comprenant au moins une fonction acide carboxylique. En d'autres termes, le copolymère réticulé selon l'invention comprend des charges anioniques qui, avantageusement, proviennent exclusivement du monomère anionique comprenant au moins une fonction acide carboxylique.

Dans le présent texte, le terme « hydrosoluble » désigne un composé (notamment un monomère) formant une solution aqueuse sans particules insolubles lorsqu'il est ajouté sous agitation pendant 4 heures à 25°C à une concentration de 20 g.L⁻¹ dans l'eau déionisée.

Au contraire, un composé « hydrophobe » n'est pas soluble dans l'eau. Ainsi, il forme un précipité lorsqu'il est ajouté sous forme solide et sous agitation pendant 4 heures à 25°C à une concentration de 20 g.L⁻¹ dans l'eau déionisée.

La polymérisation par précipitation dans un milieu solvant consiste en la polymérisation de monomères solubles dans un solvant tandis que le copolymère obtenu est insoluble, et précipite donc dans le solvant. La faisabilité de ce type de polymérisation peut être assurée optionnellement par la présence d'agents tensioactifs (ou surfactants) particuliers donnant la fluidité adaptée au milieu de dispersion.

Selon un mode de réalisation, le copolymère est obtenu à partir d'au moins un monomère anionique comprenant au moins une fonction acide carboxylique, d'au moins un monomère hydrophobe de formule (I), d'au moins un monomère cationique et d'au moins un agent réticulant.

Le monomère anionique comprenant au moins une fonction acide carboxylique est de préférence choisi parmi l'acide acrylique, l'acide méthacrylique, l'acide itaconique, l'acide crotonique, l'acide maléique et l'acide fumarique. L'acide acrylique et l'acide méthacrylique sont tout particulièrement préférés, particulièrement l'acide acrylique.

Le copolymère comprend de 60 à 99,8 mol% (pourcentage molaire) d'au moins un monomère anionique acide carboxylique, préférentiellement de 78 à 99,8 mol%, plus préférentiellement de 85 à 99,8 mol%, encore plus préférentiellement de 88 à 99,8 mol%.

Selon un mode de réalisation, les fonctions acides carboxyliques du monomère anionique sont salifiées par un agent de salification, appelé également agent de neutralisation. Comme déjà indiqué, 30 % à 90 % en mol des fonctions acide carboxylique du copolymère sont neutralisées, plus avantageusement 40 % à 90 %. La salification est réalisée préalablement à la polymérisation par précipitation. Bien entendu, il s'agit du pourcentage de nombre de fonctions C(=O)OH neutralisées par rapport au nombre total de fonctions C(=O)OH des monomères présents avant le début de la polymérisation.

L'agent de salification est avantageusement une base de Brønsted. Il est choisi de préférence parmi l'ammoniac, le carbonate de sodium, le carbonate de potassium, le carbonate d'ammonium, le bicarbonate de sodium, le bicarbonate de potassium, le bicarbonate d'ammonium, et leurs mélanges. L'ammoniac est tout particulièrement préféré.

Le monomère hydrophobe est de formule (I) : 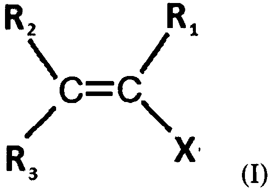 dans laquelle :
R₁, R₂ et R₃ sont, indépendamment l'un de l'autre, un atome d'hydrogène ou un groupe méthyle,
X est un groupe C(=O)-O-Y,
dans lequel Y est un groupe hydrocarboné, saturé ou insaturé, linéaire ou ramifié, comprenant 15 à 25 atomes de carbone.

Selon un mode de réalisation particulier, le monomère hydrophobe est de formule (I) dans laquelle :
R₁ est un groupe méthyle, R₂ et R₃ sont des atomes d'hydrogène,
X est un groupe C(=O)-O-Y,
dans lequel Y est une chaine alkyle linéaire de 18 atomes de carbone (C₁₈H₃₇).

Le copolymère comprend préférentiellement de 0,1 à 13 mol%, plus préférentiellement de 0,1 à 10 mol% de monomère de formule (I).

De manière optionnelle, le copolymère peut comprendre un ou plusieurs monomères cationiques. Le ou les monomères cationiques peuvent être choisis notamment parmi les monomères du type acrylamide, acrylique, vinylique, allylique ou maléique, possédant une fonction ammonium quaternaire. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de methacrylamido propyltrimethyl ammonium (MAPTAC).

De manière plus préférentielle, le copolymère selon l'invention est obtenu en l'absence de monomères non ioniques hydrosolubles choisis parmi l'acrylamide, le méthacrylamide ; le N-isopropylacrylamide ; le N,N-diméthylacrylamide ; le N,N diéthylacrylamide ; le N-méthylolacrylamide ; la N-vinylformamide ; le N-vinyl acétamide ; la N-vinylpyridine ; la N-vinylpyrrolidone ; l'acryloyl morpholine, et la diacétone acrylamide.

Le copolymère est préparé en présence d'au moins un agent réticulant. L'agent réticulant est choisi de préférence dans le groupe comprenant des monomères à insaturation polyéthylénique (ayant au minimum deux fonctions insaturées), comme par exemples les fonctions vinyliques, allyliques, acryliques et époxy que l'on retrouve notamment dans le méthylène bis acrylamide (MBA), ou la triallyamine, ou encore par des macroamorceurs tels que les polyperoxydes, polyazoiques et les polyagents de transfert tels que les polymères polymercaptants par exemple.

De manière optionnelle, le copolymère réticulé est préparé en présence d'au moins un agent de transfert de chaîne, qui est de préférence choisi dans le groupe comprenant les agents de transfert de chaîne, de type phosphate, tels que l'hypophosphite de sodium, les alcools, tels que le méthanol ou l'isopropanol, à base de thiol, tel que le 2-mercaptoéthanol et les mélanges des agents précédents.

Le solvant utilisé pour la polymérisation par précipitation est un alcool comprenant 1 à 4 carbones. Il est avantageusement choisi parmi le méthanol, l'éthanol, le propan-1-ol, l'isopropanol, le tert-butanol ou leurs mélanges. Préférentiellement, le solvant utilisé est le tert-butanol.

Selon un mode de réalisation particulier, la polymérisation peut être réalisée en présence d'eau. Le solvant peut comprendre jusqu'à 10% en poids d'eau, préférentiellement jusqu'à 5% en poids d'eau.

Selon un autre aspect, l'invention concerne un procédé de préparation d'un copolymère tel que décrit ci-avant, par polymérisation par précipitation. Le procédé est principalement caractérisé en ce qu'il comprend les étapes suivantes :
- préparation d'un milieu réactionnel comprenant au moins un solvant et de 5% à 35% massique d'au moins un monomère comprenant au moins une fonction acide carboxylique, le solvant comprenant au moins un alcool comprenant 1 à 4 atomes de carbone,
- salification de 30 % à 90 % molaire des fonctions acide carboxylique du monomère comprenant au moins une fonction acide carboxylique, par l'ajout d'un agent de salification,
- introduction de 0,01 % à 20% massique d'au moins un monomère hydrophobe de formule (I) et de 1 x 10⁻⁶ % à 2 % massique d'au moins un agent réticulant dans le milieu réactionnel, les pourcentages massiques 5% à 35%, 0,01% à 20% et 1 x 10⁻⁶ % à 2 % étant exprimés par rapport au milieu réactionnel final, qui comprend le monomère comprenant au moins une fonction acide carboxylique, le monomère hydrophobe de formule (I), l'agent réticulant, et le solvant,
- polymérisation des monomères comprenant au moins une fonction acide carboxylique et des monomères hydrophobes de formule (I), pour obtenir le copolymère.

Les pourcentages massiques décrits ci-dessus, à savoir de 5% à 35% massique d'au moins un monomère comprenant au moins une fonction acide carboxylique, de 0,01 % à 20% massique d'au moins un monomère hydrophobe de formule (I), et de 1 x 10⁻⁶ % à 2 % massique d'au moins un agent réticulant, sont exprimés par rapport au milieu réactionnel final, qui comprend le monomère comprenant au moins une fonction acide carboxylique, le monomère hydrophobe de formule (I), l'agent réticulant, et le solvant.

Selon l'invention les monomères et l'agent réticulant représentent avantageusement jusqu'à 36% massique du milieu réactionnel (final), préférentiellement jusqu'à 31% massique, plus préférentiellement jusqu'à 25% massique.

Une fois la réaction achevée, le copolymère obtenu forme un précipité au sein du milieu réactionnel.

De préférence, une fois la polymérisation achevée, on sépare le copolymère du milieu réactionnel.

La concentration en monomère comprenant au moins une fonction acide carboxylique dans le milieu réactionnel est comprise préférentiellement entre 5% et 30% en pourcentage massique par rapport au milieu réactionnel.

La concentration en monomère hydrophobe de formule (I) dans le milieu réactionnel est comprise préférentiellement entre 0,01% et 15% en pourcentage massique par rapport au milieu réactionnel.

La concentration en agent réticulant dans le milieu réactionnel est comprise préférentiellement entre 1x10⁻⁶ % et 1,5 % massique par rapport au milieu réactionnel (final).

La réaction de polymérisation est amorcée par introduction d'un initiateur de radicaux libres. A titre d'exemple d'agent initiateur de radicaux libres, on peut citer les couples oxydant-réducteur avec, parmi les oxydants, l'hydroperoxyde de cumène ou le butylhydroxypéroxyde tertiaire, et parmi les réducteurs, les persulfates tels que le métabisulfite de sodium et le sel de Mohr. Des composés azoïques tels que le 2,2'-azobis(isobutyronitrile) et le chlorhydrate de 2,2'-azobis(2-amidinopropane) peuvent également être utilisés.

Une fois la polymérisation achevée, le copolymère apparaît dans le milieu réactionnel sous la forme d'un précipité. Il s'agit généralement d'un précipité blanc. Il peut être isolé facilement en utilisant les procédés usuels de séparation, d'évaporation et de séchage. Le solvant peut être éliminé par filtration ou distillation.

Selon un autre aspect, l'invention concerne une pâte d'impression comprenant au moins un copolymère tel que décrit ci-avant.

Une telle pâte d'impression est de préférence une pâte d'impression pigmentaire ou d'impression fixé-lavé, utilisée pour appliquer respectivement des pigments ou des colorants sur un matériau textile.

De préférence, la pâte d'impression contient au moins un colorant (pâte d'impression fixé-lavé) ou au moins un pigment (pâte d'impression pigmentaire).

De préférence, la quantité de copolymère dans la pâte d'impression est comprise entre 0,1% et 5% en poids par rapport au poids de la pâte d'impression, plus avantageusement entre 1% et 5%.

D'autres composants peuvent être présents dans la pâte d'impression, comme par exemple des acides des bases et/ou des sels naturels ou synthétiques pour ajuster le pH à la valeur souhaitée ; des agents de surface anioniques, non ioniques ou cationiques ; des agents antimousse et antigel ; des agents dispersants ; des latex/liants hydrophobes ; des agents de fixation ; des composés polyhydroxylés ; des produits de réaction de composés hydroxylés et d'isocyanates ; des polyesters préparés par réaction d'acide téréphtalique et d'un ou plusieurs polyéthylène glycols. Ces composants sont couramment utilisés ou recommandés pour l'impression ou la finition des textiles.

Le copolymère peut être utilisé sous forme de poudre ou sous forme de dispersion. La forme dispersion s'obtient en introduisant la poudre obtenue dans une huile organique.

L'huile organique peut être d'origine végétale, animale ou minérale. La chimie de cette huile peut être de type ester, acide gras, chaine alcane linéaire ou ramifiée, dérivé parafinique, ou il peut s'agir d'un mélange de plusieurs de ces huiles.

L'huile organique a de préférence un point éclair supérieur à 50°C (avantageusement inférieur à 400 °C) et un point de fusion inférieur à 15°C (avantageusement supérieur à -100 °C).

En complément de l'huile organique, une ou plusieurs cires de point de fusion plus élevé peuvent aussi être utilisées, avantageusement à hauteur de 0% à 20% en poids par rapport au poids de la dispersion. L'utilisation de ce type de cire permet d'améliorer la stabilité de la dispersion en augmentant la viscosité du milieu.

La dispersion peut comprendre au moins un tensioactif eau-dans-huile avec un HLB (Hydrophilic Lipophilic Balance en anglais, ou balance hydrophile lipophile en français) compris entre 1 et 6 afin de stabiliser la dispersion et d'améliorer la dispersion du copolymère dans l'huile.

La valeur HLB est déterminée selon la méthode de Griffin (Classification of Surface-Active Agents by HLB, Journal of the Society of Cosmetic Chemists 1 (1949): 311).

Le ou les tensioactifs eau-dans-huile sont préférentiellement choisis parmi les esters préparés à partir d'alcool de type glycérol, diglécerol, triglycérol, ou des alcools de type saccharides comme le maltinol ou le sorbitol. Ces polyols peuvent être sujets à des estérifications simples comme le monooléate de sorbitan ou à de multiples estérifications. De manière préférentielle, on utilise des esters de sorbitan.

La dispersion peut également comprendre au moins un tensioactif huile-dans-eau avec un HLB supérieur ou égal à 7 afin de permettre à la dispersion de libérer le copolymère une fois dilué dans l'eau.

Le ou les tensioactifs huile-dans-eau sont préférentiellement choisis parmi les éthers de type alcool gras éthoxylés, des esters de saccharide ou d'alcool polyhydrique ou des bétaïnes. De manière préférentielle, on utilise des alcools éthoxylés.

Selon un autre aspect, l'invention concerne un procédé d'impression d'une matière textile utilisant une pâte d'impression comprenant au moins un copolymère tel que décrit précédemment. Le procédé comprend les étapes suivantes :
- préparation d'une pâte d'impression en mélangeant au moins un copolymère réticulé tel que décrit précédemment et au moins un colorant ou au moins un pigment,
- application de la pâte d'impression sur une matière textile.

Selon un mode de réalisation, la matière textile à imprimer est avantageusement constituée de polyamide naturel ou synthétique, de la polyamine, du polypropylène, du polyester, de la soie, de la laine, de la viscose, de la rayonne, de coton ou un mélange laine/polyamide. De manière préférentielle, les matières textiles sont avantageusement constituées de polyamide, du polyester, du polypropylène, de la laine ou un mélange laine/polyamide.

De préférence, le procédé d'impression est réalisé sur des substrats de type tapis ou moquette comprenant une matière textile, ladite matière textile étant de préférence choisie parmi celles décrites précédemment.

La pâte d'impression selon l'invention peut être appliquée de manière conventionnelle à l'aide de différentes méthodes d'impressions, telles que l'impression sérigraphique et l'impression digitale par spray (pulvérisation) par exemple.

L'impression sérigraphique consiste à appliquer de l'encre grâce à une maille tendue dans un cadre ou écran, en utilisant un calque ou masque, réalisant ainsi une impression couleur directement sur le textile.

L'impression digitale par spray consiste à pulvériser des microgouttes d'encre sur un support textile via une tête d'impression jet d'encre.

S'agissant de l'impression digitale par spray, on peut citer à titre d'exemples le Chromojet (zimmer), le Millitron (Milliken) et l'Atexco (Hangzhou Honghua Digital Technology). L'impression digitale par spray se distingue de l'impression digitale conventionnelle par le fait que la pâte d'impression est maintenue sous pression et projetée sur le substrat en quantité suffisamment importante pour couvrir et pénétrer celui-ci en profondeur.

Dans le cas de la technologie de Zimmer et Atexco par exemple, une buse d'impression basée sur le principe d'une valve piézoélectrique s'ouvre et se ferme pour démarrer/continuer ou arrêter le dépôt de l'encre sur le textile.

Dans la technologie de Milliken par exemple, le jet d'encre est permanent et dévié soit sur le substrat pour appliquer de la couleur soit dans un collecteur relié à la réserve d'encre. Toutes les méthodes d'impression notées ci-avant requièrent une viscosité et un profil rhéologique particulier de la pâte d'impression afin d'obtenir les performances d'impression recherchées.

L'impression digitale se distingue de l'impression sérigraphique par un système piloté électroniquement qui vient déposer de l'encre sur des zones précises du substrat. Ce système est utilisé pour imprimer tout type de matière tel que le papier, le tissus tissé ou tricoté.

De manière préférentielle le procédé d'impression de matière textile selon l'invention utilise la méthode d'impression digitale par spray.

Les exemples ci-après illustrent des modes de réalisation non limitatifs de l'invention.

### Exemples de modes de réalisation de l'invention

### Protocole de préparation d'un copolymère (A-O) par polymérisation par précipitation

On mélange dans un réacteur 654g de tert-butanol pur avec 16,77g d'eau afin d'obtenir un mélange comprenant 97,5% en poids de tert-butanol. On ajoute ensuite de l'acide acrylique dans le réacteur. L'acide acrylique est ensuite neutralisé par ajout d'ammoniac gazeux jusqu'à obtenir un pH compris entre 6 et 6,5. Une fois ce pH obtenu, du méthylacrylate de stéaryle et du MBA (N,N-méthylène-bis-acrylamide) sont ajoutés. On dégaze la préparation dans le réacteur en injectant de l'azote. On ajoute ensuite 18.75ppm d'HTPO (4-hydroxy-2,2,6,6-tetramethylpiperidine-N-oxyle) et la température du réacteur est maintenue à 70°C à l'aide d'un bain thermostaté. La réaction de polymérisation est initiée en ajoutant 0.32g de V50 (2,2'-azobis[2-méthylpropionamidine],dichlorhydrate) et 0.64g de VA044 (2,2'-[azobis(1-methylethylidene)]bis[4,5-dihydro-1H-imidazole dihydrochloride]). L'amorçage de la polymérisation est observé généralement après 1 à 8 minutes. Le bain thermostaté est ajusté à 90°C pendant 2 heures.

On observe la présence d'un précipité blanc dans le solvant. Ce précipité blanc correspond au copolymère de l'invention. Ce dernier est séparé du solvant par distillation à l'aide d'un évaporateur rotatif avec de l'huile chauffée à 90°C et sous une pression réduite de 700mbars. Le copolymère obtenu sous forme de poudre est ensuite placé 12 heures à l'étuve à 70°C.

Les copolymères A à O sont préparés selon le protocole ci-avant. Les quantités des différents monomères sont ajustées afin d'obtenir les proportions indiquées dans le tableau 1 ci-dessous pour chaque exemple.

### Préparation du polymère P

Le polymère P est préparé selon le protocole ci-avant, c'est-à-dire par polymérisation par précipitation, mais sans utiliser de méthacrylate de stéaryle (MAS).

### Préparation du polymère Q

Le polymère Q est préparé selon le protocole suivant, par polymérisation en émulsion inverse.

On charge dans un bécher de 1 L sous agitation magnétique les ingrédients de la phase aqueuse :
- 310 g d'eau déionisée
- 217g d'acide acrylique
- 168g d'ammoniaque en solution à 30%
- 13.33 g de méthylacrylate de stéaryle
- 0.696 g de méthylènebisacrylamide (2400 ppm)

Ensuite dans un réacteur en verre de 1 L, sous agitation mécanique, la phase organique est préparée avec :
- 133.5 g huile minérale paraffinique (celtis 903)
- 133.5 g d'hydrocarbure aliphatique (Isopar L)
- 22.5 g de monooléate de sorbitan.

La phase aqueuse est transférée progressivement dans la phase organique. La pré-émulsion ainsi formée est alors soumise à fort cisaillement pendant 45 secondes (Ultra Turrax, IKA).

L'émulsion inverse est alors dégazée pendant 30 minutes grâce à un simple barbotage d'azote.

On ajoute alors une solution aqueuse contenant 0,5 % en masse de métabisulfite de sodium et une autre solution contenant 0.35% en masse de TBHP à un débit de 10 mL/h pendant une durée de 60 minutes. Une fois la température maximum atteinte, on maintient la température du mélange réactionnel pendant 60 minutes avant refroidissement.

Le polymère est ensuite isolé par précipitation dans l'acétone.

### Préparation du polymère R

Le polymère R est préparé selon le protocole du polymère Q, mais sans utiliser de méthacrylate de stéaryle (MAS).

Les résultats sont indiqués dans le tableau 1 ci-dessous.

**Tableau 1 : Récapitulatif des essais et des caractéristiques**

| | | **Monomère (mol%)** | | | | | **Caractéristiques** | | | |
|---|---|---|---|---|---|---|---|---|---|---|
| | | **AA** | **ACM** | **MAS** | **MBA *10⁻⁶** | **Neutralisation (%)** | **Pricipitation^{(c)}** | **Viscosité^{(a)}** | **Disperrion^{(d)}** | **pH^{{b}}** |
| Contre-exemples | **A** | 29,68 | 69,67 | 0,65 | 2400 | - | bonne | 2700 | difficile | 3.6 |
| | **B** | 49,68 | 49,67 | 0,65 | 2400 | - | bonne | 2860 | difficile | 3.6 |
| | **C** | 30,00 | 70,00 | - | 2400 | - | bonne | 2300 | difficile | 3.6 |
| | **D** | 50,00 | 50,00 | - | 2400 | - | bonne | 2500 | difficile | 3.6 |
| | **E** | 100,00 | - | - | 2400 | - | non | impossible | impossible | na |
| | **F** | 99,35 | - | 0,65 | 2400 | - | non | impossible | impossible | na |
| | **G** | 99,35 | - | 0,65 | 2400 | 15 | non | impossible | impossible | na |
| | **H** | 99,35 | - | 0,65 | 2400 | 20 | non | impossible | impossible | na |
| | **I** | 99,35 | - | 0,65 | 2400 | 100* | non | impossible | impossible | - |
| | **J** | 99,35 | - | 0,65 | 2400 | 100** | bonne | 17000 | facile | 7.3 |
| Invention | **K** | 99,35 | - | 0,65 | 2400 | 35 | bonne | 4600 | facile | 5.3 |
| | **L** | 99,35 | - | 0,65 | 2400 | 40 | bonne | 14860 | facile | 5.5 |
| | **M** | 99,35 | - | 0,65 | 2400 | 50 | bonne | 19750 | facile | 5.8 |
| | **N** | 99,35 | - | 0,65 | 2400 | 75 | bonne | 22500 | facile | 6.2 |
| | **O** | 99,35 | - | 0,65 | 2400 | 90 | bonne | 29500 | facile | 6.7 |
| Contre-exemples | **P** | 100 | - | - | 2400 | 75 | bonne | 18500 | - | 6.2 |
| | **Q** | 99,35 | - | 0,65 | 2400 | 75 | - | 2600 | - | 6,2 |
| | **R** | 100 | - | - | 2400 | 75 | - | 2500 | - | 6,2 |

| | | | | | | | | | | |
|---|---|---|---|---|---|---|---|---|---|---|
| AA : acide acrylique ACM : acrylamide MAS : méthacrylate de stéaryle MBA : en ppm par rapport au poids des monomères *post neutralisé = acide acrylique neutralisé après polymérisation **pré-neutralisé = acide acrylique neutralisé avant polymérisation ^{(a)} La viscosité (mPa/s) est mesurée à 0,5% en poids de copolymère dans de l'eau déionisée à 25°C, avec un viscosimètre Brookfield module RV à la vitesse de 20 tours par minute. ^{(b)} Le pH est mesuré à 1% en poids de copolymère dans de l'eau déionisée à 25°C. ^{(c)} La précipitation est évaluée de manière visuelle sur l'apparition ou non d'un précipité. ^{(d)} La dispersion est jugée facile lorsque la dispersion est complète en moins de 10 minutes sous une agitation (tripale) de 500 tours par minute dans un bécher de 300 ml d'eau à 25°C pour une concentration en polymère de 0,5 % en poids. | | | | | | | | | | |

Comme décrit précédemment, tous les pourcentages molaires sont exprimés par rapport au nombre total de moles de monomères incluant l'agent réticulant. C'est également le cas pour l'ensemble des polymères du tableau 1. Cependant, dans un but de simplification de la lecture des résultats, les valeurs de concentrations (% molaires) ont été arrondies au centième pour les monomères et au dix-millième pour l'agent réticulant.

En cas de pré-neutralisation de l'acide acrylique à 100%, le pH final (pH = 7,3) est trop élevé pour une application d'impression sur moquette nécessitant un pH préférentiellement de l'ordre de 5.6 à 6.5 pour permettre la fixation des colorants. Une neutralisation de 100% nécessite donc un ajustement ultérieur du pH pour une utilisation en tant qu'épaississant d'une pâte d'impression.

Pour tous les exemples, la quantité totale de monomères et d'agent réticulant est égale à 15,5% massique, par rapport à la masse totale du milieu réactionnel (final).

### Protocole de préparation des pâtes d'impression

Dans un bécher, on ajoute 498 g d'eau déionisée et 2 g de colorant acid black dye MR 125% (de chez Evron dyestuff). L'ensemble est mélangé puis le copolymère, en tant qu'épaississant, est ajouté sous agitation pour épaissir le mélange formant une pâte d'impression. La quantité de copolymère est déterminée afin d'obtenir une viscosité finale de la pâte d'impression de 2500 mPa/s, mesurée avec un viscosimètre Brookfield module RV à la vitesse de 20 tours par minute à 25°C.

Sur un système d'impression digitale de laboratoire de type Chromojet HSV 400, les pâtes d'impression obtenues à partir des copolymères J à O sont testées sur leur capacité à passer à travers les buses d'impression en un temps donné.

Cette capacité à pouvoir transférer une quantité de pâte d'impression suffisante conditionne le niveau de couleur obtenu lorsque l'on imprime un motif sur un textile, et le niveau de productivité de l'étape d'impression.

Pour réaliser ce test pour chaque pâte d'impression, on ordonne à la tête d'impression de s'ouvrir en continue sur 15 secondes et on collecte la pâte d'impression transférée dans un collecteur. On pèse alors la quantité de pâte d'impression transférée durant ce temps imparti. Les résultats obtenus sont indiqués dans le tableau 2 ci-dessous.

**Tableau 2 : exemples applicatifs utilisant différents copolymères**

| Polymère | % de neutralisation | Quantité d'épaississant en g/kg de pâte | Quantité de pâte transférée (en g) |
|---|---|---|---|
| **J** | 100% | 4,12 | 70 |
| **K** | 35% | 4,63 | 102 |
| **L** | 40% | 4,67 | 105 |
| **M** | 50% | 4,51 | 99 |
| **N** | 75% | 4,28 | 97 |
| **O** | 90% | 4,2 | 92 |
| **P** | 75% | 4,6 | 94 |
| **Q** | 75% | 11,2 | 61 |
| **R** | 75% | 11,1 | 62 |

Comme on peut le constater, la quantité de pâte d'impression transférée chute fortement lorsque le taux de neutralisation se situe entre 90% et 100% de neutralisation avant polymérisation.

Or, comme décrit précédemment, la quantité de pâte d'impression déposée est primordiale dans cette application d'impression textile car elle impacte directement le niveau de couleur obtenu.

Par conséquent, en se basant sur les résultats du tableau 2, on remarque qu'une neutralisation de l'acide acrylique comprise entre 30 et 90% permet de maximiser la quantité de pâte d'impression transférée sur le substrat textile et donc d'améliorer la qualité et la productivité du procédé d'impression comparativement à ceux de l'état de l'art.

A travers ces résultats, on peut en déduire que le taux de neutralisation impacte directement le profil rhéologique du copolymère.

Concernant le polymère P (contre-exemple), on obtient une quantité de pâte transférée proche des polymères K à O de l'invention. Néanmoins, à l'application, on observe un voile blanc à la surface du textile imprimé. Ceci traduit le phénomène de glaçage ou « frosting » en anglais, observé fréquemment dans les procédés connus de l'homme du métier lors de l'impression d'une matière textile avec une pâte d'impression à base d'acide acrylique. Comme décrit précédemment, ce phénomène est principalement dû au maintien insuffisant de la pâte d'impression à la surface du textile lors de l'impression.

Par ailleurs, on remarque clairement que la synthèse par polymérisation en émulsion inverse (polymères Q et R) conduit à un produit consommant largement plus de polymère pour obtenir la viscosité cible, et conduit à des polymères qui limitent fortement le transfert de pâte à travers une buse d'impression. En particulier, le polymère R correspond à l'exemple 2A du document EP0161038 décrit en début de texte, qui concerne un polymère obtenu par polymérisation en émulsion inverse d'acide acrylique/acrylate d'ammonium en présence de MBA en tant qu'agent réticulant, à l'exception du ratio 40/60 d'acide acrylique/acrylate d'ammonium.

Les exemples précédents démontrent ainsi la synergie des caractéristiques du copolymère de l'invention, à savoir (1)-(2) la présence du monomère anionique et du monomère hydrophobe de formule (I) dans les gammes de concentrations décrites, (3) la polymérisation par précipitation, (4) la neutralisation de 30 % à 90 % des fonctions acide carboxylique du monomère anionique préalablement à la polymérisation, et (5) l'utilisation d'un alcool comprenant 1 à 4 atomes de carbone, dans l'obtention d'un copolymère réticulé présentant des propriétés épaississantes au moins équivalentes à celles de copolymères de l'état de l'art, tout en se passant d'acrylamide, et ce, sans phénomène de glaçage.

## Revendications

1. Copolymère réticulé obtenu par polymérisation par précipitation d'au moins :
- 60 % à 99,8 % molaire d'au moins un monomère anionique comprenant au moins une fonction acide carboxylique,
- 0,1 % à 20 % molaire d'au moins un monomère hydrophobe de formule (I), 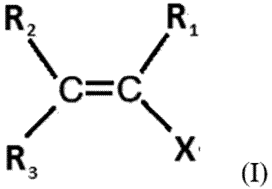 dans laquelle :
R₁, R₂ et R₃ sont, indépendamment l'un de l'autre, un atome d'hydrogène, ou un groupe méthyle,
X est un groupe C(=O)-O-Y,
dans lequel Y est un groupe hydrocarboné, saturé ou insaturé, linéaire ou ramifié, comprenant 15 à 25 atomes de carbone,
- 1*10⁻⁹ % à 2 % molaire d'au moins un agent réticulant,
le copolymère réticulé étant **caractérisé en ce que** 30 % à 90 % molaire des fonctions acide carboxylique du monomère anionique sont sous forme salifiée préalablement à la polymérisation par précipitation,
le solvant utilisé pour la polymérisation par précipitation comprenant au moins un alcool comprenant 1 à 4 atomes de carbone, et
le copolymère étant obtenu en l'absence de monomères non ioniques hydrosolubles.

2. Copolymère réticulé selon la revendication 1, ***caractérisé*** en ce le copolymère est obtenu en l'absence des monomères non ioniques hydrosolubles choisis parmi l'acrylamide, le méthacrylamide, le N-isopropylacrylamide, le N,N-diméthylacrylamide, le N, N diéthylacrylamide, le N-méthylolacrylamide, la N-vinylformamide, le N-vinyl acetamide, la N-vinylpyridine, la N-vinylpyrrolidone, l'acryloyl morpholine, et la diacétone acrylamide.

3. Copolymère réticulé selon la revendication 1 ou 2, ***caractérisé* en ce que** le monomère comprenant au moins une fonction acide carboxylique est choisi parmi l'acide acrylique, l'acide méthacrylique, l'acide itaconique, l'acide crotonique, l'acide maléique et l'acide

4. Copolymère réticulé selon l'une quelconque des revendications précédentes, ***caractérisé* en ce que** le monomère comprenant au moins une fonction acide carboxylique est l'acide acrylique.

5. Copolymère réticulé selon l'une quelconque des revendications précédentes, ***caractérisé* en ce que** les fonctions acide carboxylique sont salifiées par un agent de salification choisi parmi l'ammoniac, le carbonate de sodium, le carbonate de potassium, le carbonate d'ammonium, le bicarbonate de sodium, le bicarbonate de potassium, le bicarbonate d'ammonium, et leurs mélanges.

6. Copolymère réticulé selon la revendication 5, ***caractérisé* en ce que** l'agent de salification est l'ammoniac.

7. Copolymère réticulé selon l'une quelconque des revendications précédentes, ***caractérisé* en ce que** le copolymère est obtenu par polymérisation par précipitation de 0,1 % à 10% molaire du monomère hydrophobe de formule (I).

8. Copolymère réticulé selon l'une quelconque des revendications précédentes, ***caractérisé* en ce que** le monomère hydrophobe est de formule (I) dans laquelle :
R₁ est un groupe méthyle, R₂ et R₃ sont des atomes d'hydrogène,
X est un groupe C(=O)-O-Y, dans lequel Y est une chaine alkyle linéaire de 18 atomes de carbone.

9. Procédé de préparation d'un copolymère réticulé selon l'une quelconque des revendications précédentes par polymérisation par précipitation, ***caractérisé* en ce qu'**il comprend les étapes suivantes :
- préparation d'un milieu réactionnel comprenant au moins un solvant et de 5% à 35% massique d'au moins un monomère comprenant au moins une fonction acide carboxylique, le solvant comprenant au moins un alcool comprenant 1 à 4 atomes de carbone,
- salification de 30% à 90% molaire des fonctions acide carboxylique du monomère comprenant au moins une fonction acide carboxylique par l'ajout d'un agent de salification,
- introduction de 0,01% à 20% massique d'au moins un monomère hydrophobe de formule (I) et de 1 x 10⁻⁶ % à 2 % massique d'au moins un agent réticulant dans le milieu réactionnel, les pourcentages massiques 5% à 35%, 0,01% à 20% et 1 x 10⁻⁶ % à 2 % étant exprimés par rapport au milieu réactionnel final, qui comprend le monomère comprenant au moins une fonction acide carboxylique, le monomère hydrophobe de formule (I), l'agent réticulant, et le solvant,
- polymérisation des monomères comprenant au moins une fonction acide carboxylique et des monomères hydrophobes de formule (I), pour obtenir le copolymère réticulé.

10. Pâte d'impression comprenant au moins un copolymère réticulé selon l'une des revendications 1 à 8.

11. Pâte d'impression selon la revendication 10, ***caractérisée* en ce que** la quantité de copolymère réticulé dans la pâte d'impression est comprise entre 0,1% et 5% en poids.

12. Procédé d'impression d'une matière textile utilisant une pâte d'impression selon l'une quelconque des revendications 10 à 11.

13. Procédé d'impression d'une matière textile selon la revendication 12, ***caractérisé* en ce qu'**il comprend les étapes suivantes :
- préparation d'une pâte d'impression en mélangeant au moins un copolymère réticulé selon l'une quelconque des revendications 1 à 8 avec au moins un colorant ou au moins un pigment,
- application de la pâte d'impression sur une matière textile.

14. Procédé d'impression d'une matière textile selon la revendication 12 ou la revendication 13*, **caractérisé*** en que la matière textile est choisie parmi les polyamides naturels, les polyamides synthétiques, la polyamine, le polypropylène, le polyester, la soie, la laine, la viscose, la rayonne, le coton, ou un mélange laine/polyamide.

## Patentansprüche

1. Vernetztes Copolymer, das durch Fällungspolymerisation wie folgt erhalten wird:
- 60 bis 99,8 Mol-% mindestens eines anionischen Monomers, das mindestens eine Carbonsäuregruppe enthält,
- 0,1 bis 20 Mol-% mindestens eines hydrophoben Monomers mit der Formel (I): 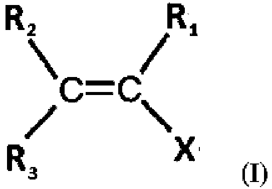 wobei:
R₁, R₂ und R₃ unabhängig voneinander ein Wasserstoffatom oder eine Methylgruppe sind,
X eine Gruppe C(=O)-O-Y ist,
und Y eine gesättigte oder ungesättigte, lineare oder verzweigte Kohlenwasserstoffgruppe mit 15 bis 25 Kohlenstoffatomen ist,
- 1*10⁻⁹ bis 2 Mol-% mindestens eines Vernetzungsmittels,
wobei das vernetzte Copolymer **dadurch gekennzeichnet ist, dass** 30 bis 90 Mol-% der Carbonsäuregruppen des anionischen Monomers vor der Polymerisation durch Fällung in salzbildender Form vorliegen,
und das für die Fällungspolymerisation verwendete Lösungsmittel mindestens einen Alkohol mit 1 bis 4 Kohlenstoffatomen enthält, und das Copolymer in Abwesenheit von wasserlöslichen, nichtionischen Monomeren erhalten wird.

2. Vernetztes Copolymer nach Anspruch 1, ***dadurch gekennzeichnet*, dass** das Copolymer in Abwesenheit von wasserlöslichen, nichtionischen Monomeren erhalten wird, die aus Acrylamid, Methacrylamid, N-Isopropylacrylamid, N,N-Dimethylacrylamid, N,N-Diethylacrylamid, N-Methylolacrylamid, N-Vinylformamid, N-Vinylacetamid, N-Vinylpyridin, N-Vinylpyrrolidon, Acryloylmorpholin und Diacetonacrylamid ausgewählt sind.

3. Vernetztes Copolymer nach Anspruch 1 oder 2, ***dadurch gekennzeichnet*, dass** das Monomer, das mindestens eine Carbonsäuregruppe enthält, aus Acrylsäure, Methacrylsäure, Itaconsäure, Crotonsäure, Maleinsäure und Fumarsäure ausgewählt ist.

4. Vernetztes Copolymer nach einem der vorhergehenden Ansprüche, ***dadurch gekennzeichnet*, dass** es sich bei dem Monomer, das mindestens eine Carbonsäuregruppe enthält, um Acrylsäure handelt.

5. Vernetztes Copolymer nach einem der vorhergehenden Ansprüche, ***dadurch gekennzeichnet*, dass** die Carbonsäuregruppen durch ein salzbildendes Mittel, das aus Ammoniak, Natriumcarbonat, Kaliumcarbonat, Ammoniumcarbonat, Natriumbicarbonat, Kaliumbicarbonat, Ammoniumbicarbonat und deren Mischungen ausgewählt ist, ein Salz gebildet haben.

6. Vernetztes Copolymer nach Anspruch 5, ***dadurch gekennzeichnet*, dass** es sich bei dem salzbildenden Mittel um Ammoniak handelt.

7. Vernetztes Copolymer nach einem der vorhergehenden Ansprüche, ***dadurch gekennzeichnet*, dass** das Copolymer durch Fällungspolymerisation von 0,1 bis 10 Mol-% des hydrophoben Monomers der Formel (I) erhalten wird.

8. Vernetztes Copolymer nach einem der vorhergehenden Ansprüche, ***dadurch gekennzeichnet,* dass** das hydrophobe Monomer die Formel (I) aufweist, wobei:
R₁ eine Methylgruppe ist, R₂ und R₃ Wasserstoffatome sind,
X eine Gruppe C(=O)-O-Y ist, in der Y eine lineare Alkylkette mit 18 Kohlenstoffatomen ist.

9. Verfahren zur Herstellung eines vernetzten Copolymers nach einem der vorhergehenden Ansprüche durch Fällungspolymerisation, ***dadurch gekennzeichnet*, dass** es folgende Schritte umfasst:
- Herstellung eines Reaktionsmediums, das mindestens ein Lösungsmittel und 5 bis 35 Massenprozent mindestens eines Monomers enthält, das mindestens eine Carbonsäuregruppe aufweist, wobei das Lösungsmittel mindestens einen Alkohol mit 1 bis 4 Kohlenstoffatomen enthält,
- Salzbildung der Carbonsäuregruppen des Monomers, das mindestens eine Carbonsäuregruppe enthält, in einem molaren Anteil von 30 % bis 90 % durch Zugabe eines salzbildenden Mittels,
- Einbringung von 0,01 bis 20 Massenprozent mindestens eines hydrophoben Monomers der Formel (I) und 1 × 10⁻⁶ bis 2 Massenprozent mindestens eines Vernetzungsmittels in das Reaktionsmedium, wobei sich die Massenanteile von 5 % bis 35 %, 0,01 % bis 20 % und 1 × 10⁻⁶ % bis 2 % auf das endgültige Reaktionsmedium beziehen, in dem das Monomer mit mindestens einer Carbonsäuregruppe, das hydrophobe Monomer der Formel (I), das Vernetzungsmittel und das Lösungsmittel enthalten sind,
- Polymerisation von Monomeren, die mindestens eine Carbonsäuregruppe enthalten, und hydrophoben Monomeren der Formel (I), um das vernetzte Copolymer zu erhalten.

10. Druckpaste, die mindestens ein vernetztes Copolymer nach einem der Ansprüche 1 bis 8 enthält.

11. Druckpaste nach Anspruch 10, ***dadurch gekennzeichnet*, dass** der Anteil an vernetztem Copolymer in der Druckpaste zwischen 0,1 Gew.-% und 5 Gew.-% liegt.

12. Verfahren zum Bedrucken eines Textilstoffes mit einer Druckpaste nach einem der Ansprüche 10 bis 11.

13. Verfahren zum Bedrucken eines Textilstoffs nach Anspruch 12, ***dadurch gekennzeichnet*, dass** es folgende Schritte umfasst:
- Herstellung einer Druckpaste durch Mischen mindestens eines vernetzten Copolymers nach einem der Ansprüche 1 bis 8 mit mindestens einem Farbstoff oder mindestens einem Pigment,
- Auftragen der Druckpaste auf einen Textilstoff.

14. Verfahren zum Bedrucken eines Textilstoffes nach Anspruch 12 oder Anspruch 13, ***dadurch gekennzeichnet*, dass** der Textilstoff aus natürlichen Polyamiden, synthetischen Polyamiden, Polyamin, Polypropylen, Polyester, Seide, Wolle, Viskose, Rayon, Baumwolle oder einer Mischung aus Wolle und Polyamid ausgewählt ist.

## Claims

1. Crosslinked copolymer obtained by precipitation polymerization of at least:
- 60 mol% to 99.8 mol% of at least one anionic monomer comprising at least one carboxylic acid function,
- 0.1 mol% to 20 mol% of at least one hydrophobic monomer of formula (I), 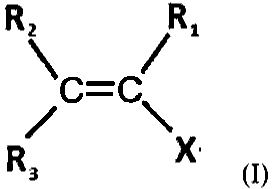 wherein:
R₁, R₂ and R₃ are, independently of each other, a hydrogen atom, or a methyl group,
X is a group C(=O)-O-Y,
wherein Y is a hydrocarbon group, saturated or unsaturated, linear or branched, comprising 15 to 25 carbon atoms,
- 1*10⁻⁹ mol% to 2 mol% of at least one crosslinking agent,
the crosslinked copolymer being **characterized in that** 30 mol% to 90 mol% of the carboxylic acid functions of the anionic monomer are in salified form prior to the precipitation polymerization,
the solvent used for the precipitation polymerization comprising at least one alcohol comprising 1 to 4 carbon atoms, and
the copolymer being obtained in the absence of water-soluble non-ionic monomers.

2. The crosslinked copolymer according to claim 1, ***characterized* in that** the copolymer is obtained in the absence of water-soluble non-ionic monomers chosen from among acrylamide, methacrylamide, N-isopropylacrylamide, N,N-dimethylacrylamide, N,N diethylacrylamide , N-methylolacrylamide, N-vinylformamide, N-vinyl acetamide, N-vinylpyridine, N-vinylpyrrolidone, acryloyl morpholine, and diacetone acrylamide.

3. The crosslinked copolymer according to claim 1 or 2, ***characterized* in that** the monomer comprising at least one carboxylic acid function is selected from among acrylic acid, methacrylic acid, itaconic acid, crotonic acid, maleic acid and fumaric acid.

4. The crosslinked copolymer according to any one of the preceding claims, ***characterized* in that** the monomer comprising at least one carboxylic acid function is acrylic acid.

5. The crosslinked copolymer according to any one of the preceding claims, ***characterized* in that** the carboxylic acid functions are salified with a salifying agent selected from among ammonia, sodium carbonate, potassium carbonate, ammonium carbonate, sodium bicarbonate, potassium bicarbonate, ammonium bicarbonate, and mixtures thereof.

6. The crosslinked copolymer according to claim 5, ***characterized* in that** the salifying agent is ammonia.

7. The crosslinked copolymer according to any one of the preceding claims, ***characterized* in that** the copolymer is obtained by precipitation polymerization of 0.1 mol% to 10 mol% of the hydrophobic monomer of formula (I).

8. The crosslinked copolymer according to any one of the preceding claims, ***characterized* in that** the hydrophobic monomer is of formula (I) wherein:
R₁ is a methyl group, R₂ and R₃ are hydrogen atoms,
X is a group C(=O)-O-Y,
wherein Y is a linear alkyl chain of 18 carbon atoms.

9. A method for preparing a crosslinked copolymer according to any one of the preceding claims by precipitation polymerization, ***characterized* in that** it comprises the following steps:
- preparing a reaction medium comprising at least one solvent and from 5% to 35% by weight of at least one monomer comprising at least one carboxylic acid function, the solvent comprising at least one alcohol comprising 1 to 4 carbon atoms,
- salifying 30 mol% to 90 mol% of the carboxylic acid functions of the monomer comprising at least one carboxylic acid function by the addition of a salifying agent,
- introducing 0.01% to 20% by weight of at least one hydrophobic monomer of formula (I) and 1 x 10⁻⁶% to 2% by weight of at least one crosslinking agent into the reaction medium, the weight percentages of 5% to 35%, 0.01% to 20%, and 1 × 10⁻⁶% to 2% being expressed relative to the final reaction medium, which comprises the monomer containing at least one carboxylic acid function, the hydrophobic monomer of formula (I), the crosslinking agent, and the solvent,
- polymerizing monomers comprising at least one carboxylic acid function and hydrophobic monomers of formula (I) to obtain the crosslinked copolymer.

10. A printing paste comprising at least one crosslinked copolymer according to one of claims 1 to 8.

11. The printing paste according to claim 10, ***characterized* in that** the amount of crosslinked copolymer in the printing paste is comprised between 0.1% and 5% by weight.

12. A method for printing a textile material using a printing paste according to any one of claims 10 to 11.

13. The method for printing a textile material according to claim 12, ***characterized* in that** it comprises the following steps:
- preparing a printing paste by mixing at least one crosslinked copolymer according to any one of claims 1 to 8 with at least one dye or at least one pigment,
- applying the printing paste over a textile material.

14. The method for printing a textile material according to claim 12 or claim 13, ***characterized* in that** the textile material is selected from among natural polyamides, synthetic polyamides, polyamine, polypropylene, polyester, silk, wool, viscose, rayon, cotton, or a wool/polyamide mixture.
